# EUROPEAN PATENT SPECIFICATION

(11) **EP 2 092 606 B1**
(45) Date of publication and mention of the grant of the patent: **18.05.2011**
(21) Application number: 07835119.4
(22) Date of filing: 18.10.2007
(51) Int. Cl.: H01Q 17/00, B32B 18/00

(54) **MICROWAVE ABSORBER, ESPECIALLY FOR HIGH TEMPERATURE APPLICATIONS**
MIKROWELLENABSORBER INSBESONDERE FÜR HOCHTEMPERATURANWENDUNGEN
ABSORBEUR DE MICRO-ONDES, EN PARTICULIER POUR DES APPLICATIONS À HAUTE TEMPÉRATURE

(30) Priority: 19.10.2006 SE 0602197
(43) Date of publication of application: 26.08.2009
(73) Proprietor: Totalförsvarets Forskningsinstitut, 164 90 Stockholm (SE)
(72) Inventor: JÄNIS, Anna, 597 31 Åtvidaberg (SE)
(74) Representative: Hedefält, Dag
(86) International application number: PCT/SE2007/000918
(87) International publication number: WO 2008/051140

(56) References cited:
- EP-A1- 0 677 888
- EP-A2- 1 378 304
- WO-A-94/24724
- WO-A-2006/057618
- WO-A1-2004/091049
- US-A- 5 214 432
- US-A- 5 627 541
- US-A- 6 013 322

## Description

The present invention relates to a radiation absorber in the microwave field. It is known to coat surfaces reflecting radar radiation with different types of radar absorber. Most radar absorbers currently have a layer structure. There are those using one or more thin resistive sheets with an appropriate surface resistance. Prior art absorbers of this type are Salisbury screens, Jaumann absorbers and single foil layers.

A Salisbury screen consists of a resistive sheet which is placed at a distance of a quarter of a wavelength from a metal surface. The resistive sheet has the same surface resistance as the wave impedance in vacuum and the intermediate layer is a dielectric layer with the dielectric constant near 1. A Jaumann absorber is a combination of two or more Salisbury screens. A single foil layer consists of two dielectric layers with an intermediate resistive sheet. It is well known how the various prior art radar absorbers are to be built in respect of surface resistance of resistive sheets, relative dielectric constant of dielectric layers and thickness of the layers included for the radar absorber to function according to requirements.

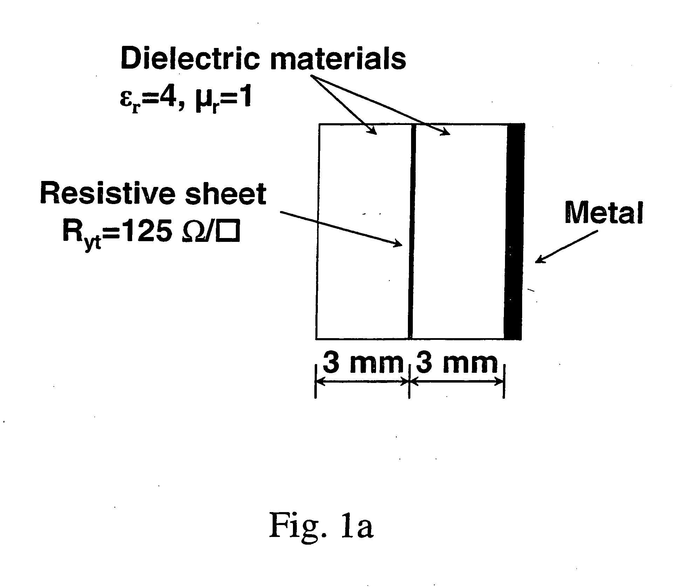

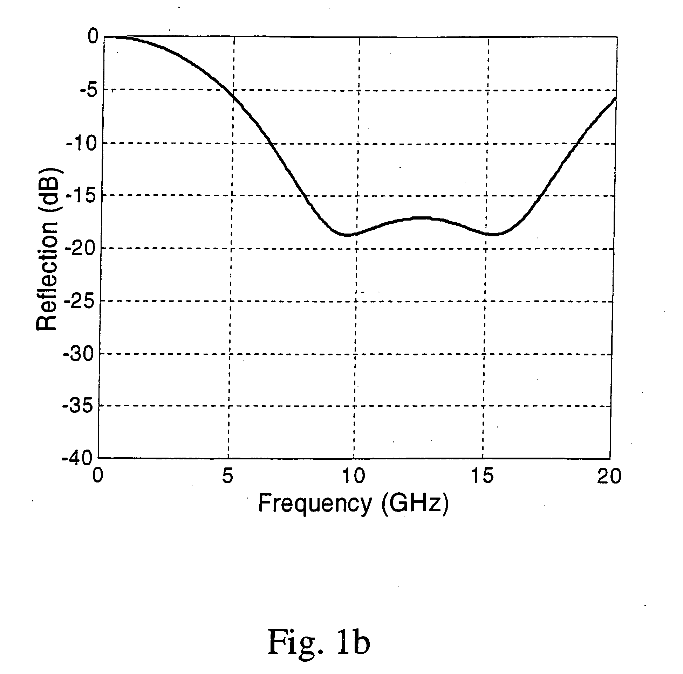

The surface resistance of the resistive sheet, the relative dielectric constant of the distance material and the thickness of various layers are due to the frequency range in which the structure is optimised and the degree of reflection that is desired, that is due to the demands placed on the absorber. One example of a single foil layer optimised for the X and P band is illustrated in Fig. 1 a. The surface resistance of the resistive sheet is 125 Ω/□. The two layers of distance material are dielectric materials with a relative dielectric constant εᵣ = 4 and a thickness of 3 mm. Fig. 1b shows the measured reflection in the frequency range 0-20 GHz from the radar absorber in Fig. 1 a. The absorber has a reflection less than -13 dB (5%) in the frequency range 7.4-17.7 GHz.

Resistive sheets in radar absorbers that are currently used are often made of carbon fibre cloth or a plastic film with a thin lossy sheet. These materials function at room temperature and neighbouring temperatures. However, they cannot be used at significantly higher temperatures since they would then be destroyed. It is, however, very important to be able to produce a radar absorber which can be applied to hot surfaces, such as the outlet of a jet engine or a rocket engine. This has not been possible with prior art radar absorbers.

The present invention provides a solution to this problem by the invention being designed as defined in the following independent claim. The remaining claims concern advantageous embodiments of the invention. The invention is, of course, also useful in traditional applications at lower temperatures.

The invention will in the following be described in more detail with reference to the accompanying drawings, on which
- Fig. 1a: shows an example of the structure of a single foil layer,
- Fig. 1b: is a diagram of the radiation absorbing ability of the single foil layer in Fig. 1a,
- Fig. 2a: illustrates a first test design of the invention,
- Fig. 2b: is a diagram of the radar absorbing ability of the embodiment of the invention shown in Fig. 2a,
- Fig. 3a: illustrates a second test design of the invention, and
- Fig. 3b: is a diagram of the radar absorbing ability of the embodiment of the invention shown in Fig. 3a.

In the invention, one starts, due to the application, from a radar absorber of some known type, in which the traditional resistive sheet or the traditional resistive sheets are replaced by sheets made of a MAX phase material. Such materials resist high temperatures, see the further discussion of these materials below. Moreover, dielectric layers included are made of a temperature resistant material with appropriate electrical properties. These materials are here referred to as low permittivity ceramics (relative dielectric constant εᵣ <15), all materials that are inorganic and not metals being called ceramics.

This means that also different types of glass are included in the ceramics. There are those that resist high temperatures. In Table 1 below there are a few examples of low permittivity ceramics and their dielectric constant. Also ceramic composites, (particle, whiskers and fibre reinforced ceramic composites) can be used as dielectric layers provided they have an appropriate dielectric constant.

**Table 1**

| Material | Dielectric constant εᵣ |
|---|---|
| Steatite, Mg₃Si₄O₁₀(OH)₂ | 6.0-6.1 |
| Cordierite, Mg₂A₁₄Si₅O₁₈ | 5.0-5.7 |
| Forsterite, 2MgO • SiO₂ | 6.4 |
| Mullite, Al₆Si₂O₁₃ | 6.7-7.5 |
| Aluminium oxide, Al₂O₃ | 9.5-9.7 |
| Beryllium oxide, BeO | 6.5-6.8 |
| Aluminium nitride, AIN | 8.8-8.9 |
| Silicon nitride, Si₃N₄ | 8.1 |
| Quartz glass, SiO₂ glass | 3.8 |

When needed, the dielectric constant of ceramics can be reduced by pores being introduced in the material. The dielectric constant can also be reduced by production of composites. For mullite, it is possible to produce, for example, composites of mullite and quartz glass or mullite and cordierite.

Regarding the resistive sheet, it is demonstrated in the following that a MAX phase material can, in terms of the electromagnetic properties, function in the same way as resistive sheets used up to now. When producing a radar absorber, a technique that is known from the radiation absorption point of view is therefore used, and a person skilled in the art calculates, in the traditional way, desirable electromagnetic properties of the layers included, based on requirements.

The special feature of the invention is the knowledge that MAX phase materials can be used for the resistive sheet. MAX phase materials have many good properties in the context, for instance they resist high temperatures.

MAX phase materials are materials that are defined by the formula Mₙ₊₁AXₙ. In the formula, M stands for a transition metal in the group consisting of scandium (Sc), titanium (Ti), vanadium (V), chromium (Cr), zirconium (Zr), niobium (Nb), molybdenum (Mo), hafnium (Ht) and tantalum (Ta) or a combination of two or more transition metals from the group. A stands for elements in the group aluminium (Al), silicon (Si), phosphorus (P), sulphur (S), gallium (Ga), germanium (Ge), arsenic (As), cadmium (Cd), indium (In), tin (Sn), tallium (TI) and lead (Pb) or a combination of two or more elements in the group. X stands for carbon (C) and/or nitrogen (N).

In the formula for MAX phase materials, Mₙ₊₁AXₙ, n can be either 1, 2 or 3, which results in three groups of materials. The first group with n=1 is called the 211 group. The figures stand for number of atoms of each chemical element M, A and X, respectively. Table 2 below contains all currently known materials in the 211 group. The second group has n=2 and is called the 312 group. Three materials are known in the group, Ti₃GeC₂, Ti₃AlC₂ and Ti₃SiC₂. The third group has n=3 and is called the 413 group. This contains only one currently known material Ti₄AlN₃.

**Table 2**

| | MAX phase material, 211 group | | | | |
|---|---|---|---|---|---|
| Ti₂AlC | Ti₂AlN | Hf₂PbC | Cr₂GaC | V₂AsC | Ti₂lnN |
| Nb₂AlC | (Nb,Ti)₂AlC | Ti₂AlN_{1/2}C_{1/2} | Nb₂GaC | Nb₂AsC | Zr₂lnN |
| Ti₂GeC | Cr₂AlC | Zr₂SC | Mo₂GaC | Ti₂CdC | Hf₂lnN |
| Zr₂SnC | Ta₂AlC | Ti₂SC | Ta₂GaC | Sc₂lnC | Hf₂SnN |
| Hf₂SnC | V₂AlC | Nb₂SC | Ti₂GaN | Ti₂lnC | Ti₂TlC |
| Ti₂SnC | V₂PC | Hf₂SC | Cr₂GaN | Zr₂lnC | Zr₂TlC |
| Nb₂SnC | Nb₂PC | Ti₂GaC | V₂GaN | Nb₂lnC | Hf₂TlC |
| Zr₂PbC | Ti₂PbC | V₂GaC | V₂GeC | Hf₂lnC | Zr₂TlN |

MAX phase materials have a special crystal structure which combines the best properties of the metals with the advantages of the ceramics. They have high electrical and thermal conductivity, low friction, very high resistance to wear and resist temperature shocks. The materials can be made by sintering or by PVD, Physical Vapour Deposition.

Since MAX phase materials have high conductivity and can resist extremely high temperatures, they can be used as a thin resistive sheet in a microwave absorber at high temperatures, above 1000°C, but, of course, also at room temperature and temperatures therebetween.

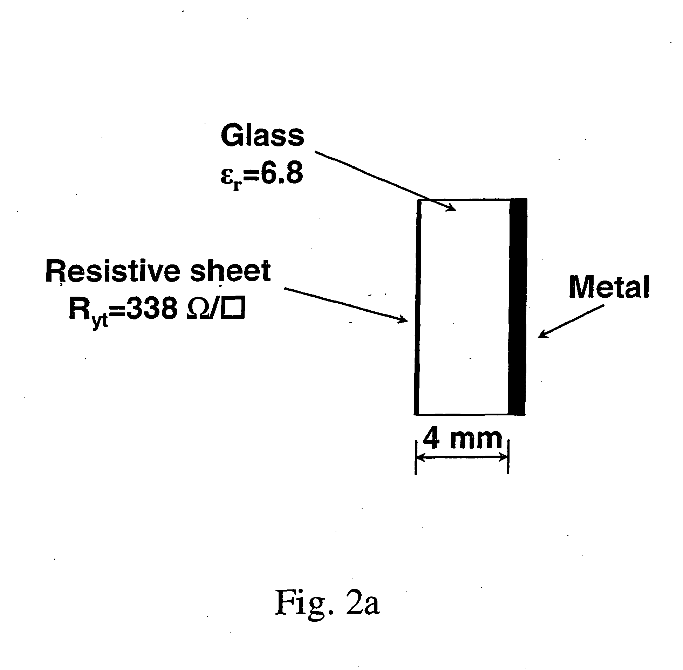

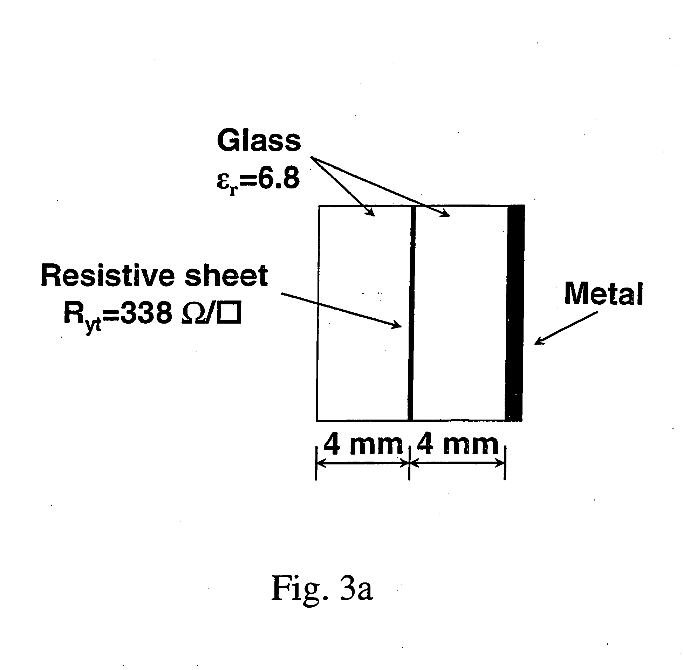

In order to fundamentally determine that MAX phase materials can function as a thin resistive sheet in a radar absorbing layer structure, a few thin coatings of titanium silicon carbide Ti₃SiC₂ were produced on a glass substrate using PVD. MAX phase materials from the 312 group are highly convenient for use in the present invention. Fig. 2a illustrates a Salisbury screen-like layer structure with the resistive sheet made of Ti₃SiC₂ and Fig. 3a illustrates a single foil layer, likewise with the resistive sheet made of Ti₃SiC₂.

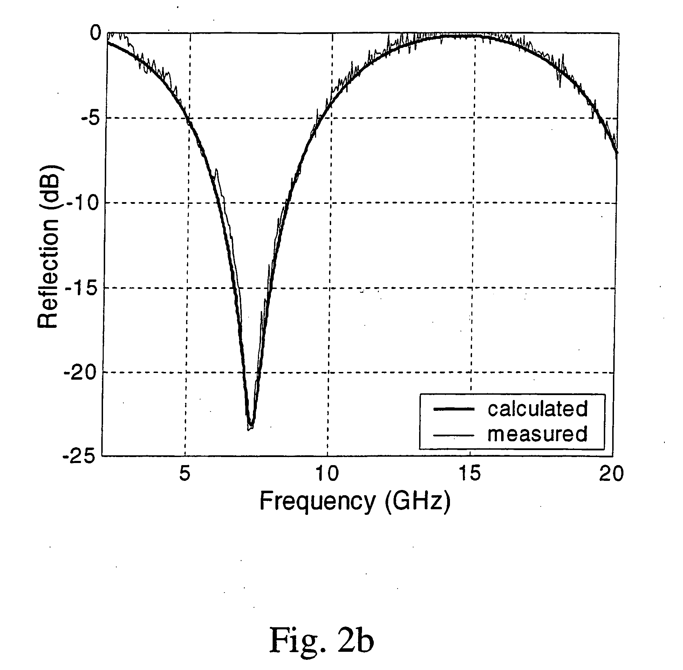

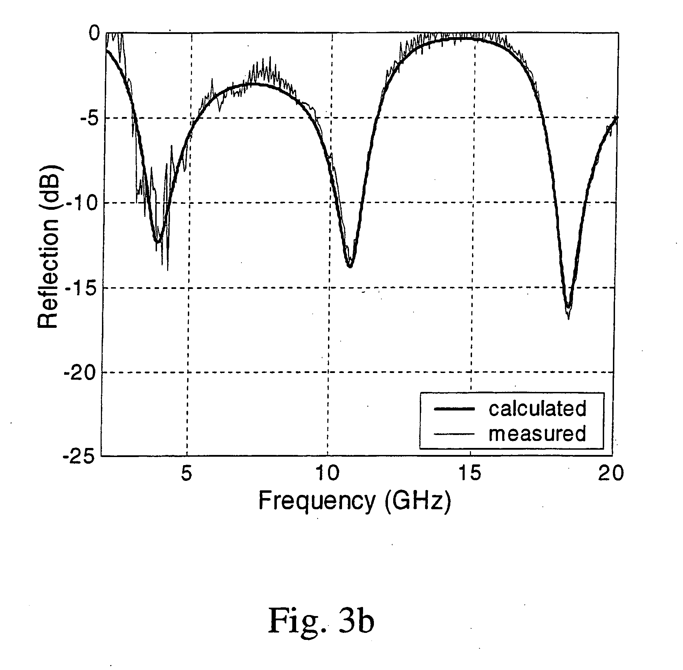

Figs 2b and 3b are diagrams of measured reflection from the respective radar absorbers in free space in the frequency range 2-20 GHz at room temperature and theoretically calculated reflection of the same structures. The diagrams demonstrate that the measured reflection very well matches the theoretically calculated values. This means that a resistive sheet made of Ti₃SiC₂ well serves its purpose in the respective radiation absorbing layer structures.

It is important to emphasise that the created layer structures are used only to verify that MAX phase materials can be used for the purpose in question. None of the layer structures was optimised in any way, which is noticed from the fact that reflection minima in Figs 2b and 3b are narrowband and not optimal. If the surface resistance of the resistive sheet, the relative dielectric constant of the distance material and the thickness of different layers are optimised, a smaller reflection can be obtained for a broader frequency band. The conventional methods for optimising radiation absorbing layer structures can be used in the case in question and are well known to a person skilled in the art.

The surface resistance of the produced test coating of Ti₃SiC₂ was 338 Ω/□ which is near the wave impedance of vacuum (≈377Ω), which is advantageous for a Salisbury screen. The surface resistance of the sheet can be changed by choosing a suitable material, for instance another MAX phase material with different conductivity σ and/or choosing the thickness d of the sheet, since R_{yt}=1/σd.

In order to determine that MAX phase materials can function also at high temperatures as a thin resistive sheet in a radar absorber, a Salisbury screen-like sample was produced with quartz glass SiO₂ as a substrate, which resists higher temperatures. In the same way as in the above-mentioned room temperature example, a thin coating of Ti₃SiC₂ was applied to the quartz glass substrate using PVD. Measurements performed on the sample demonstrate a good function with a distinct reflection minimum at least up to 200°C.

## Claims

1. A microwave absorber, especially for high temperature applications, comprising at least one resistive sheet and at least one dielectric layer, said dielectric layer being made of a material that resists high temperatures, **characterised in that** the resistive sheet is made of a MAX phase material.

2. A microwave absorber as claimed in claim 1, **characterised in that** the resistive sheet is made of a MAX phase material from the 312 group.

3. A microwave absorber as claimed in claim 2, **characterised in that** the resistive sheet is made of a titanium silicon carbide, Ti₃SiC₂.

4. A microwave absorber as claimed in any one of claims 1-3, **characterised in that** the dielectric material is a low permittivity ceramic or a ceramic composite.

5. A microwave absorber as claimed in claim 4, **characterised in that** pores are introduced in the ceramic material for the purpose of lowering the dielectric constant to a desirable level.

## Patentansprüche

1. Mikrowellenabsorber, insbesondere für Hochtemperaturanwendungen, welcher mindestens eine widerstandsfähige Fläche und mindestens ein dielektrische Schicht aufweist, wobei die dielektrische Schicht aus einem Werkstoff gebildet ist, welche hohen Temperaturen standhält, **dadurch gekennzeichnet, dass** die widerstandsfähige Fläche aus einem MAX-Phasenwerkstoff hergestellt ist.

2. Mikrowellenabsorber nach Anspruch 1, **dadurch gekennzeichnet, dass** die widerstandsfähige Fläche aus einem MAX-Phasenwerkstoff von der 312-Gruppe hergestellt ist.

3. Mikrowellenabsorber nach Anspruch 2, **dadurch gekennzeichnet, dass** die widerstandsfähige Fläche aus Titan-Siliziumkarbid, Ti₃SiC₂, hergestellt ist.

4. Mikrowellenabsorber nach einem der Ansprüche 1 bis 3, **dadurch gekennzeichnet, dass** der dielektrische Werkstoff ein keramischer Werkstoff mit geringer Dielektrizitätskonstante oder ein keramischer Verbundwerkstoff ist.

5. Mikrowellenabsorber nach Anspruch 4, **dadurch gekennzeichnet, dass** Poren in den keramischen Werkstoff zum Zwecke der Senkung der Dielektrizitätskonstanten auf einen gewünschten Pegel eingebracht werden.

## Revendications

1. Absorbeur de micro-ondes en particulier pour des applications à haute température comportant au moins une feuille résistante et au moins une couche diélectrique, la couche diélectrique étant réalisée en une matière qui résiste aux hautes températures,
absorbeur **caractérisé en ce que**
la feuille résistante est une matière MAX phase.

2. Absorbeur de micro-ondes selon la revendication 1,
**caractérisé en ce que**
la feuille résistante est réalisée en une matière MAX phase du groupe 312.

3. Absorbeur de micro-ondes selon la revendication 2,
**caractérisé en ce que**
la feuille résistante est en carbure de silicium titane Ti₃SiC₂.

4. Absorbeur de micro-ondes selon l'une quelconque des revendications 1 à 3,
**caractérisé en ce que**
la matière diélectrique est une céramique à faible permittivité ou une céramique composite.

5. Absorbeur de micro-ondes selon la revendication 4,
**caractérisé en ce que**
les pores sont réalisés dans la matière céramique pour abaisser la constante diélectrique à un niveau approprié.
